# EUROPEAN PATENT SPECIFICATION

(11) **EP 2 600 724 B1**
(45) Date of publication and mention of the grant of the patent: **07.09.2016**
(21) Application number: 11748757.9
(22) Date of filing: 05.08.2011
(51) Int. Cl.: A23L 29/219, A21D 2/36, A21D 2/18

(54) **METHOD FOR MANUFACTURING BREAD CONTAINING DRIED FRUIT**
VERFAHREN ZUR HERSTELLUNG VON TROCKENFRÜCHTE ENTHALTENDEM BROT
PROCÉDÉ DE FABRICATION DE PAIN CONTENANT DES FRUITS SECS

(30) Priority: 05.08.2010 JP 2010176248
(43) Date of publication of application: 12.06.2013
(73) Proprietor: Coöperatie AVEBE U.A., 9641 GK Veendam (NL)
(72) Inventor: HIROSAWA, Shujiro, Itami-shi Hyogo (JP)
(74) Representative: V.O.
(86) International application number: PCT/NL2011/050552
(87) International publication number: WO 2012/018259

(56) References cited:
- M. MIYAZAKI ET AL: "Starch Retrogradation and Firming of Bread Containing Hydroxypropylated, Acetylated, and Phosphorylated Cross-Linked Tapioca Starches for Wheat Flour", CEREAL CHEMISTRY, vol. 82, no. 6, 1 November 2005 (2005-11-01), pages 639-644, XP55009580, ISSN: 0009-0352, DOI: 10.1094/CC-82-0639

## Description

The present invention relates to a bread in which a dried fruit has been kneaded, and more particularly to a method for manufacturing a bread containing dried fruit in which the staling of bread attributable to the effect of the dried fruit kneaded therein is prevented so as to sustain the soft texture of the bread for a long period, and to a bread containing dried fruit manufactured by this method.

Breads in which dried fruits such as raisins and figs have been kneaded (hereinafter referred to as breads containing dried fruit) are popular amongst consumers for both their flavour and their appearance. However, the migration of moisture from the bread dough to the fruit and the drop in pH and so on caused by the acidity of the fruit tends to hasten staling in breads of this type. Accordingly, to avoid the loss of the soft texture of the bread and the inevitable drop in product value which, in turn, renders the sale of the bread containing dried fruit problematic, breads of this type need to be eaten within a short period following their manufacture.

As a means for resolving this problem, a method for coating the dried fruits with a calcium pectin gel has been disclosed (Japanese Laid-Open Patent Application No. 2006-34274). According to this method, colour spread and staling of bread caused by dried fruit is prevented by immersing the dried fruit in a calcium solution before immersing the dried fruit in a pectin solution containing a highly sweet sweetener to coat the dried fruit with a calcium pectin gel, and then kneading the dried fruit in the bread dough or the like under heat. However, apart from the inadequacy of the staling-suppression effect afforded thereby, this method necessitates the implementation of a step for treating the dried fruit that is additional to the normal bread-making process, and there are restrictions inherent in the manufacturing process thereof.

Methods for improving the quality and the texture and so on of a bread based on blending a glutinous (waxy) starch or a processed hydroxypropylated starch or similar during the manufacture of a bread have also been disclosed. For example, Japanese Laid-Open Patent Application No. H5-292871 discloses the manufacture of a bread of low sugar content using a cereal flour or starch derived from a waxy material which, despite the machine-based partitioning and mould processing thereof, exhibits excellent quality in terms of its volume, external appearance and softness and so on. In addition, Japanese Laid-Open Patent Application No. H10-295253 discloses a method for manufacturing a bread with the texture of a rice cake which is based on blending tapioca starch, waxy corn starch, and a hydroxypropyl starch such as a glutinous rice starch or acetyl starch in a wheat flour starting material when the bread is manufactured.

Furthermore, Japanese Laid-Open Patent Application No. 2007-325526 discloses a bakery product manufactured by employing 0.2 to 10 parts by weight of a gelatinised, processed waxy potato with respect to 100 parts by weight of a starting material grain flour having wheat flour as the principal starting material. However, while this application discloses this bakery product as one that is produced in the form of cakes, doughnuts, cookies and biscuits and so on by blending a gelatinised, processed waxy potato in a starting material flour, it does not disclose this bakery product as one that is produced in the form of a so-called bread.

In addition, Japanese Laid-Open Patent Application No. H11-243841 discloses a method for manufacturing a bread having low dough stickiness and excellent texture and staling resistance based on the employment of a gellan gum-containing gelatinised starch obtained by gelatinising a blend of gellan gum with a tapioca starch, a wheat starch or a waxy starch when the bread is manufactured. However, none of these applications are regarded as suitable for implementation when manufacturing a bread containing dried fruit in terms of improving the quality and the texture of the bread and, moreover, they are regarded as unsuitable for application as methods for resolving the problem of loss of the soft texture of a bread caused by staling of the bread attributable to the migration of moisture to the fruit and the drop in pH caused by the acidity of the fruit.

It is an object of the present invention to provide a method for manufacturing a bread containing dried fruit that prevents the staling of bread attributable to the effects of a dried fruit kneaded therein so as to sustain the soft texture of the bread for a long period, and to provide a bread containing dried fruit manufactured by this method.

During the course of research carried out by the inventors of the present invention into methods for manufacturing a bread containing dried fruit for obviating the aforementioned problems by preventing the staling of bread attributable to the effects of a dried fruit kneaded therein so as to sustain the soft texture of the bread for a long period, it was discovered that the staling of bread attributable to the effects of a dried fruit kneaded therein could be prevented and, in turn, the soft texture of a bread could be retained for a long period by blending a glutinous (waxy) gelatinised (alphatised) hydroxypropyl starch in the starting raw material, and this led to the completion of the present invention. The advantages of the method for manufacturing a bread of the present invention reside in the implementation thereof by blending a glutinous, gelatinised hydroxypropyl starch in the starting raw material which, accordingly, requires essentially no alteration to be made to the normal bread-manufacturing process, and results in the production of bread that ages at a rate comparable to that of a bread in which no dried fruit has been kneaded.

The degree of substitution of the glutinous, gelatinised hydroxypropyl starch employed in the method for manufacturing the bread containing dried fruit of the present invention is preferably not less than 0.12, and more preferably, in actual application, lies within the range 0.12 to 0.2. The glutinous, gelatinised hydroxypropyl starch is preferably blended in an amount between 1 and 10% by weight of the starting material for manufacturing the bread. The present invention incorporates a bread containing dried fruit manufactured by the method for manufacturing a bread containing dried fruit of the present invention that retains a soft texture.

That is to say, more specifically, the present invention is constituted by: [1] a method for manufacturing a bread containing dried fruit that retains a soft texture, characterised by comprising the step of: adding a glutinous, gelatinised hydroxypropyl starch to a portion of a starting material flour; [2] a method for manufacturing bread containing dried fruit according to [1] described above, characterised in that the degree of substitution of the glutinous, gelatinised hydroxypropyl starch is not less than 0.12; [3] a method for manufacturing bread containing dried fruit according to [1] or [2] described above, characterised in that the glutinous, gelatinised hydroxypropyl starch is blended in an amount between 1 and 10% by weight of the starting material for manufacturing the bread; and [4] a bread containing dried fruit manufactured by the method for manufacturing bread containing dried fruit according to any of [1] to [3] described above that retains a soft texture.

The present invention provides a highly-palatable bread containing dried fruit in which the staling of bread in which a dried fruit has been kneaded attributable to a dried fruit kneaded therein can be effectively suppressed so as to sustain the soft texture of the bread for a long period. The product value of the bread containing dried fruit provided by the present invention is retained for a long period following the manufacture thereof and, accordingly, the present invention affords the provision of a bread containing dried fruit of a high product value in respect of the marketing and the sale thereof.

The present invention is constituted as a method for manufacturing a bread containing dried fruit that, by blending a glutinous (waxy) gelatinised hydroxypropyl starch in a starting material flour during the manufacture of a bread containing dried fruit, prevents the staling of bread attributable to the effects of a dried fruit kneaded therein so as to sustain the soft texture of the bread for a long period.

The dried fruits able to be employed in the manufacture of a bread containing dried fruit include dried grapes, figs, blueberries and apricots, currants and raisins are a typical dried fruit employed in the manufacture of a bread containing dried fruit. The dried fruit may be included in the bread in whole or in small pieces. In the latter case, the dried fruit is minced prior to being mixed with the other ingredients for the bread.

The breads of the present invention include breads that use wheat flour as the starting material to which, apart from yeast, table salt, water and yeast food, necessary secondary ingredients are added to produce a dough which, following fermentation and swelling, are subject to a heat treatment such as baking, frying or steaming, and specific examples thereof include plain breads such as a Pullman bread and English white bread, French breads such as baguettes and French stick bread, various roll breads such as sweet rolls, buns, table rolls and so on, sweetened breads such as bean-jam buns and cream buns, along with breads which are commonly referred to as yeast donuts, Chinese steamed buns and Danish pastries.

Notably, the secondary ingredients as referred to here denote secondary ingredients commonly used in the manufacture of breads or secondary ingredients used in accordance with the type of bread or the desired quality of bread, and specific examples thereof include sugars including starches and processed starches other than the glutinous, gelatinised hydroxypropyl starch, common table sugar, glucose, isomerised sugar, oligosaccharides and starch degradation products, dairy products such as skimmed milk and full-fat powdered milk, oils and fats including shortening, margarine, butter, emulsified oils and fats, emulsifiers including glycerine fatty acid esters and sucrose fatty acid esters, spices such as cinnamon and basil, liquors such as brandy and rum, nuts such as almonds and walnuts, enzymes such as α-amylase, β-amylase and glycoamylase, cheeses such as natural cheese, processed cheese, goat cheese and cheddar cheese, as well as leavening agents, inorganic salts, cocoa powder, flavourings, artificial sweeteners, dietary fibres and active gluten.

Examples of the glutinous (waxy) starch employed in the present invention include waxy corn starch, glutinous rice starch, waxy potato starch, waxy wheat starch or blends of two or more types thereof having an amylopectin content of not less than 88 wt.%, based on the dry weight of the starch, more preferably at least 95 wt.%, based on the dry weight of the starch.

The hydroxypropyl starch employed in the present invention constitutes a starch hydroxypropylated as a result of the action of propylene oxide on the aforementioned glutinous starch. This hydroxypropyl starch can be manufactured in accordance with any known method. That is to say, it may be prepared by reacting the glutinous starch described above with propylene oxide for 10 hours at 40 to 50°C under alkaline conditions. The degree of substitution thereof (expressed by the number of moles of hydroxypropyl groups per anhydroglucose unit) is not less than 0.12. If the degree of substitution is less than 0.12, the staling-suppression effect thereof is diminished. While the effect of the present invention can be produced as long as the degree of substitution is not less than 0.12, manufacture of the hydroxypropyl starch is technically difficult at a degree of substitution above 0.2, and in actual application a degree of substitution between 0.12 and 0.2 is preferred. Provided the degree of substitution of the hydroxypropyl is within the range noted above, it can be used in conjunction with a cross-linking treatment. Examples of a cross-linking agent able to be used at this time include phosphorus oxychloride and sodium trimethaphosphate.

The glutinous, gelatinised hydroxypropyl starch employed in the method for manufacturing a bread containing dried fruit of the present invention is prepared as a powder by the gelatinising treatment of the glutinous hydroxypropyl starch as described above. This gelatinised starch can be manufactured in accordance with a common method. That is to say, a starchy material is gelatinised and dried as a result of the employment of a drum drier, an extruder or a spray drier to heat a starch in the presence of water, and this is then prepared as a powder by pulverisation in accordance with need.

The manufacture of the bread of the present invention can be implemented by blending the glutinous, gelatinised hydroxypropyl starch as described above in the starting material for the manufacture of the bread during the manufacturing process thereof. Given as a baker's %, the blended amount thereof is 1 to 10% by weight, and preferably 3 to 5% by weight. While there is no effect produced thereby in a blended amount less than 1% by weight, in a blended amount in excess of 10% by weight, the suitability for the manufacture of bread is diminished, and the preparation of a satisfactory product is inhibited.

Baker's percentage is a baker's notation method indicating the flour-relative proportion of ingredients used when making breads, cakes, muffins, and other pastries. It is sometimes also referred to as baker's math. The "baker's %" used here expresses the ratio of other components when the amount by weight of the starting material flour in the blended components is taken to be 100%. For example, if a recipe calls for 10 pounds of flour and 5 pounds of water, the corresponding bakers' percentages will be 100% and 50%. Because of the way these percentages are stated, as a percent of flour mass rather than of all ingredients, the total will always exceed 100%.

The characterising features of the method for manufacturing the bread containing dried fruit of the present invention reside in the glutinous, gelatinised hydroxypropyl starch described above being blended in the starting material for the manufacture of a bread during the manufacturing process thereof, and in the adherence of this method of manufacture to the conventional method for manufacturing a bread containing dried fruit in the absence of any other particular restrictive manufacturing condition. That is to say, the bread containing dried fruit of the present invention can be manufactured by any conventional method for manufacturing a bread containing dried fruit such as the sourdough method and the straight dough method, and these methods of manufacturing may comprise kneading of a starting material and, following steps such as fermentation, division, rounding, rolling, moulding and proofing implemented in accordance with common methods, implementing a heat treatment such as baking, steaming or frying.

In addition, where a frozen dough technique employing freeze-resistant yeasts, oxidising agents and starch-degrading enzymes and so on is used, the application of the method of the present invention for a freezing dough is also possible and, where there is a desire to impart a physiological function to the bread of the present invention or to improve the nutritional value thereof, components having such functions including various dietary fibres, various oligosaccharides, polyunsaturated fatty acids, peptides, vitamins, polyphenols and minerals and so on may be added as desired.

Despite a dried fruit being kneaded therein, the aging of thus-prepared bread containing dried fruit of the present invention is comparable to that of bread that does not contain dried fruit and, accordingly, the soft texture of the bread can be enjoyed for a long period.

According to the present invention, a highly-palatable bread containing dried fruit in which the staling of bread attributable to the dried fruit kneaded therein can be effectively suppressed and the soft texture of the bread is sustained for a long period can be provided. Because the product value of the bread containing dried fruit provided by the present invention is retained for a long period following the manufacture thereof, the present invention affords the provision of a bread containing dried fruit of high product value in terms of marketing and sales.

While the present invention will be hereinafter specifically described with reference to the working examples thereof, the technical scope of the present invention should not be regarded as limited to these illustrative examples.

### Examples

### Gelatinised hydroxypropyl starch

Table 1 shows the gelatinised starches and gelatinised hydroxypropyl starches used in the working examples of the present invention. Notably, sample 9 denotes a β-starch that is the only starch not subjected to a gelatinising treatment.

**Table 1**

| Name | Starting Material | Degree of Substitution |
|---|---|---|
| Sample 1 | Waxy potato | 0.13 |
| Sample 2 | Waxy corn | 0.12 |
| Sample 3 | Tapioca | 0.09 |
| Sample 4 | Tapioca | 0.10 |
| Sample 5 | Potato | 0.12 |
| Sample 6 | Waxy potato | 0.11 |
| Sample 7 | Tapioca | 0.12 |
| Sample 8 | Waxy corn | 0 |
| Sample 9 | Waxy corn | 0.12 |

### Examples 1 and 2; Comparative Examples 1 to 8

Raisin-containing breads were prepared in accordance with the blends and steps described in Table 2. Notably, the maximum amount of added water was varied according to the added gelatinised starch and gelatinised hydroxypropyl starch, and the tests were conducted using water in amounts that were considered to be optimum amounts. The numerical values indicated in Table 2 are given in baker's %.

**Table 2**

| | Comp. Ex. 1 | Comp. Ex. 2 | Comp. Ex. 3 | Comp. Ex. 4 | Comp. Ex. 5 | Comp. Ex. 6 | Comp. Ex. 7 | Comp. Ex. 8 | Example 1 | Example 2 |
|---|---|---|---|---|---|---|---|---|---|---|
| (Sponge) Strong flour | 70 | 70 | 70 | 70 | 70 | 70 | 70 | 70 | 70 | 70 |
| Yeast food | 0.12 | 0.12 | 0.12 | 0.12 | 0.12 | 0.12 | 0.12 | 0.12 | 0.12 | 0.12 |
| Yeast | 2.5 | 2.5 | 2.5 | 2.5 | 2.5 | 2.5 | 2.5 | 2.5 | 2.5 | 2.5 |
| Water (Dough) | 42 | 42 | 42 | 42 | 42 | 42 | 42 | 42 | 42 | 42 |
| Strong flour | 30 | 30 | 30 | 30 | 30 | 30 | 30 | 30 | 30 | 30 |
| White | 10 | 10 | 10 | 10 | 10 | 10 | 10 | 10 | 10 | 10 |
| sugar | | | | | | | | | | |
| Table salt | 2 | 2 | 2 | 2 | 2 | 2 | 2 | 2 | 2 | 2 |
| Skimmed milk | 2 | 2 | 2 | 2 | 2 | 2 | 2 | 2 | 2 | 2 |
| Water | 18 | 22 | 24 | 27 | 22 | 22 | 22 | 18 | 24 | 24 |
| Shortening | 6 | 6 | 6 | 6 | 6 | 6 | 6 | 6 | 6 | 6 |
| Raisin | 40 | 40 | 40 | 40 | 40 | 40 | 40 | 40 | 40 | 40 |
| Sample 1 | | | | | | | | | 4 | |
| Sample 2 | | | | | | | | | | 4 |
| Sample 3 | | 4 | | | | | | | | |
| Sample 4 | | | 4 | | | | | | | |
| Sample 5 | | | | 4 | | | | | | |
| Sample 6 | | | | | 4 | | | | | |
| Sample 7 | | | | | | 4 | | | | |
| Sample 8 | | | | | | | 4 | | | |
| Sample 9 | | | | | | | | 10 | | |
| <Steps> | | | | | | | | | | |
| Sponge mixing | | L3H1 (rise temperature 24°C) | | | | | | | | |
| Sponge fermentation time | | 4 hrs | | | | | | | | |
| Dough mixing | | L2H2↓L2H2 low-speed mixing for 1 min following introduction of raisins (rise temperature 28°C) | | | | | | | | |
| Floor time | | 20 mins | | | | | | | | |
| Divided weight | | 240g × 3 | | | | | | | | |
| Bench time | | 20 mins | | | | | | | | |
| Mould | | U-shaped pan | | | | | | | | |
| Proofing | | 55 mins (38°C 80%RH) | | | | | | | | |
| Baking | | Top heat 190°C Bottom heat 195°C 30 mins | | | | | | | | |

Each of these breads were sampled by 10 individuals after the 1st, 2nd and 3rd days following manufacture and evaluated out of 5 points for softness (non-staling). Table 3 shows the average points thereof.

The criteria used for the 5-point maximum evaluation test described above are given below:
5 points: Very soft and moist
4 points: Soft and moist
3 points: Standard texture
2 points: Slightly dry feeling
1 point: Dry and hard
0 points: No product value

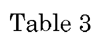

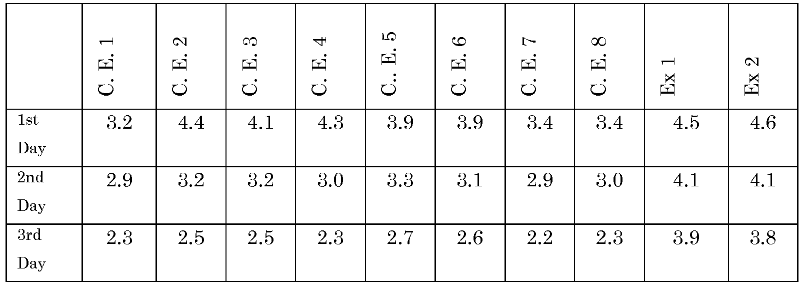

On the 1st day, the points scored by the breads of comparative examples 2 to 6 in which a non-glutinous, gelatinised starch was blended were higher than the bread of comparative example 1 in which there was no non-glutinous, gelatinised starch blended, and were comparable with the breads of working examples 1 and 2 in which a glutinous, gelatinised starch was blended. However, it is clear that by the 3rd day the points scored by the breads of each of the comparative examples were essentially the same, and were different to the points scored by the breads of the working examples. In addition, there was no difference observed between the bread of comparative example 8 in which a glutinous beta-hydroxypropyl starch was blended and the bread of comparative example 1.

### Examples 3 and 4; Comparative Examples 9 and 10

Raisin-containing breads were prepared in accordance with the blends and steps as described in Table 4. Notably, the maximum amount of added water was varied according to the added gelatinised hydroxypropyl starch, and the tests were conducted using water in amounts considered to be optimum amounts. The numerical values indicated in Table 4 are given in baker's %.

**Table 4**

| | Comparative Example 9 | Comparative Example 10 | Example 3 | Example 4 |
|---|---|---|---|---|
| (Sponge) | | | | |
| Strong flour | 70 | 70 | 70 | 70 |
| Yeast food | 0.12 | 0.12 | 0.12 | 0.12 |
| Yeast | 2.5 | 2.5 | 2.5 | 2.5 |
| Water (Dough) | 42 | 42 | 42 | 42 |
| Strong flour | 30 | 30 | 30 | 30 |
| White sugar | 10 | 10 | 10 | 10 |
| Table salt | 2 | 2 | 2 | 2 |
| Skimmed milk | 2 | 2 | 2 | 2 |
| Water | 18 | 32 | 19 | 31 |
| Shortening | 6 | 6 | 6 | 6 |
| Raisin | 40 | 40 | 40 | 40 |
| Sample 1 | 0.5 | 12 | 1 | 10 |
| <Steps> | | | | |
| Sponge mixing | L3H1 (rise temperature 24°C) | | | |
| Sponge fermentation time | 4 hrs | | | |
| Dough mixing | L2H2↓L2H2 low-speed mixing for 1 min following introduction of | | | |
| raisins (rise | temperature 28°C) | | | |
| Floor time | 20 mins | | | |
| Divided weight | 240g × 3 | | | |
| Bench time | 20 mins | | | |
| Mould | U-shaped pan | | | |
| Proofing | 55 mins (38°C 80%RH) | | | |
| Baking | Top flame 190°C Bottom flame 195°C 30 mins | | | |

Each of these breads were sampled by 10 individuals after the 1st, 2nd and 3rd days and evaluated out of 5 points for softness (non-staling). Table 5 shows the average points thereof. The criteria used for this 5-point maximum evaluation test were the same as those employed for the examples described above. Please note that, owing to the poor workability and insufficient volume of the bread of comparative example 10, this bread was not able to be sampled.

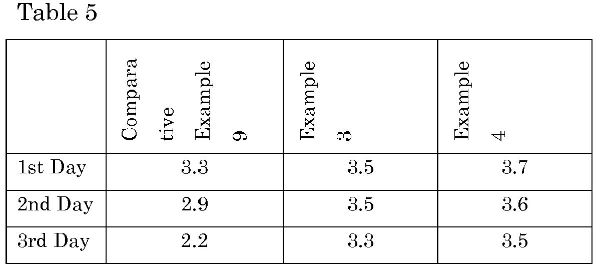

Although the 1st day evaluations of comparative example 9 and working examples 3 and 4 were essentially equivalent, on the 3rd day the points scored by comparative example 9 dropped in a similar manner to comparative example 1 but, as evidence of strong resistance to staling, the drop in the points scored by working examples 3 and 4 was small.

### Examples 5 and 6; Comparative Example 11

Raisin-containing breads were prepared in accordance with the blends and steps as described in Table 6. Notably, the maximum amount of added water was varied according to the added gelatinised starch, and the tests were conducted using water in amounts considered to be optimum amounts. The numerical values indicated in Table 6 are given in baker's %.

**Table 6**

| | Comparative Example 11 | Example 5 | Example 6 |
|---|---|---|---|
| (Sponge) | | | |
| Strong flour | 70 | 70 | 70 |
| White sugar | 2 | 2 | 2 |
| Egg | 6 | 6 | 6 |
| Emulsifier | 0.3 | 0.3 | 0.3 |
| Yeast food | 0.12 | 0.12 | 0.12 |
| Yeast | 2.5 | 2.5 | 2.5 |
| Water (Dough) | 34 | 34 | 34 |
| Strong flour | 30 | 30 | 30 |
| White sugar | 10 | 10 | 10 |
| Table salt | 1.7 | 1.7 | 1.7 |
| Skimmed milk | 3 | 3 | 3 |
| Water | 29 | 33 | 33 |
| Shortening | 8 | 8 | 8 |
| Raisin | 30 | 30 | 30 |
| Sample 1 | | 3 | |
| Sample 2 | | | 3 |
| <Steps> | | | |
| Sponge mixing | L2H1 (rise temperature 26°C) | | |
| Sponge fermentation time | 2.5 hrs | | |
| Dough mixing | L3H1↓L3H1 low-speed mixing for 1 min following introduction of raisins (rise temperature | | |
| 28°C) | | | |
| Floor time | 20 mins | | |
| Divided weight | 90g | | |
| Bench time | 20 mins | | |
| Mould | Roll mould | | |
| Proofing | 60 mins (38°C 80%RH) | | |
| Baking | Top flame 200°C Bottom flame 185°C 13 mins | | |

Each of these breads were sampled by 10 individuals after the 1st, 2nd and 3rd days and evaluated out of 5 points for softness (non-staling). Table 7 shows the average points thereof. Notably, the criteria used for this 5-point maximum evaluation test were the same as those employed for the examples described above.

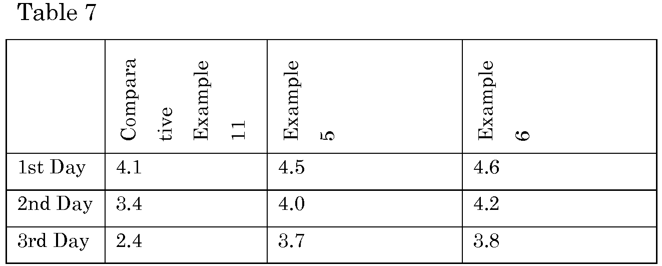

While the results obtained for working example 5, working example 6 and comparative example 11 were similar to those obtained for plain bread, and there was little variation on the 1st day between the working examples and the comparative example, the difference between them on the 3rd day was large.

## Claims

1. Method for manufacturing a bread containing dried fruit that retains a soft texture comprising the step of adding a glutinous, gelatinised hydroxypropyl starch to a portion of a starting material flour.

2. Method for manufacturing a bread containing dried fruit according to claim 1, wherein the degree of substitution of the glutinous, gelatinised hydroxypropyl starch is not less than 0.12.

3. Method for manufacturing a bread containing dried fruit according to claim 1 or 2, wherein the glutinous, gelatinised hydroxypropyl starch is blended in an amount between 1 and 10% by weight with respect to the starting material flour for manufacturing the bread.

4. Bread containing dried fruit obtainable by a method for manufacturing a bread containing dried fruit according to any of claims 1 to 3 that retains a soft texture.

## Patentansprüche

1. Verfahren zur Herstellung eines Trockenfrüchte enthaltenden Brotes, das eine weiche Textur behält, umfassend den Schritt des Hinzufügens einer klebrigen, gelatinierten Hydroxypropylstärke zu einem Teil eines Mehlausgangsmaterials.

2. Verfahren zur Herstellung eines Trockenfrüchte enthaltenden Brotes nach Anspruch 1, wobei der Grad der Substituierung der klebrigen, gelatinierten Hydroxypropylstärke nicht weniger als 0,12 ist.

3. Verfahren zur Herstellung eines Trockenfrüchte enthaltenden Brotes nach Anspruch 1 oder 2, wobei die klebrige, gelatinierte Hydroxypropylstärke in einer Menge zwischen 1 und 10 Gew.%, bezogen auf das Mehlausgangsmaterial, beigemischt wird, um das Brot herzustellen.

4. Trockenfrüchte enthaltendes Brot, erhältlich durch ein Verfahren zur Herstellung eines Trockenfrüchte enthaltenden Brotes nach einem der Ansprüche 1 bis 3, das eine weiche Textur behält.

## Revendications

1. Méthode de fabrication d'un pain contenant des fruits secs qui conserve une texture souple comprenant l'étape d'ajout d'un hydroxypropyl amidon gélatinisé gluant à une partie d'une matière première farine.

2. Méthode de fabrication d'un pain contenant des fruits secs selon la revendication 1, dans laquelle le degré de substitution de l'hydroxypropyl amidon gélatinisé gluant n'est pas inférieur à 0,12.

3. Méthode de fabrication d'un pain contenant des fruits secs selon la revendication 1 ou 2, dans laquelle l'hydroxypropyl amidon gélatinisé gluant est mélangé en une quantité comprise entre 1 et 10 % en poids relativement à la matière première farine pour la fabrication du pain.

4. Pain contenant des fruits secs susceptible d'être obtenu par une méthode de fabrication d'un pain contenant des fruits secs selon l'une quelconque des revendications 1 à 3 qui conserve une texture souple.
